(19) Europäisches Patentamt / European Patent Office / Office européen des brevets

(11) **EP 3 469 351 B1**

(12) **EUROPEAN PATENT SPECIFICATION**

(45) Date of publication and mention
of the grant of the patent:
**24.06.2020 Bulletin 2020/26**

(21) Application number: **16788007.9**

(22) Date of filing: **19.10.2016**

(51) Int Cl.:
*G01N 29/04* (2006.01)   *G01N 29/07* (2006.01)
*G01N 29/22* (2006.01)   *G01N 29/32* (2006.01)
*G01N 29/44* (2006.01)

(86) International application number:
**PCT/CH2016/000135**

(87) International publication number:
**WO 2018/072042 (26.04.2018 Gazette 2018/17)**

(54) **METHOD AND DEVICE FOR COMPENSATING FOR COUPLING NONUNIFORMITIES IN ULTRASONIC TESTING**

VERFAHREN UND VORRICHTUNG ZUR KOMPENSATION VON KOPPLUNGSUNGLEICHMÄSSIGKEITEN BEI DER ULTRASCHALLPRÜFUNG

PROCÉDÉ ET DISPOSITIF DE COMPENSATION DES NON-UNIFORMITÉS DE COUPLAGE DANS LES TESTS AUX ULTRASONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.04.2019 Bulletin 2019/16**

(73) Proprietor: **Proceq SA**
**8603 Schwerzenbach (CH)**

(72) Inventors:
• **GATTIKER, Felix**
**8037 Zürich (CH)**
• **SCHLEGEL, Thomas**
**8604 Volketswil (CH)**
• **MENNICKE, Ralph**
**8610 Uster (CH)**

(74) Representative: **Sutter, Kurt**
**E. Blum & Co. AG**
**Vorderberg 11**
**8044 Zürich (CH)**

(56) References cited:
**WO-A1-2016/083759    US-A- 4 255 798**
**US-A- 5 216 638       US-A1- 2016 290 972**

**Description**

Technical Field

The invention relates to a method and a device for testing a component, such as a body of concrete or another building component, by means of ultrasound.

Background Art

The destruction-free testing of components by means of ultrasound provides an important tool in various fields of technology. It can e.g. be used to locate reinforcements, voids, cracks or inhomogeneities in building materials, such as concrete.

A device of this type is shown in US 7587943. It comprises a plurality of ultrasonic transducers arranged in a housing. Driver electronics are provided for individually sending and/or receiving signals through the transducers.

To operate the device, the user holds the same against the component to be tested, and then the transducers are operated to perform a scanning operation.

The device of US 7587943 comprises a plurality of modules, each of them having several testing heads with ultrasonic transducers. One of the modules is operated as transmitter module to send out signal pulses, which are then received by the other modules.

Disclosure of the Invention

The problem to be solved by the present invention is to provide such a method and device with improved measurement accuracy.

This problem is solved by the method and device of the independent claims.

Accordingly, the method for testing a component by means of ultrasound comprises the following steps:

- Applying a device having at least one ultrasound emitter and a plurality of ultrasound receivers against the component to be tested: In the device, the ultrasound receivers are located at differing locations in respect to the ultrasound emitter.
- Generating a probe signal by means of said ultrasound emitter: The probe signal can e.g. be a single ultrasound pulse or a sequence of pulses.
- Receiving, by means of the ultrasound receivers, a plurality of response signals: These response signals are caused by the probe signal propagating along various paths through the component. Therefore, the response signals will typically be formed by a superposition of signals travelling along the component's surface and signals entering the same and being reflected from structures within or at the boundaries of the component.
- In addition, in the response signal of at least a group of the ultrasound receivers, further processing steps are carried out. (This group of ultrasound receivers advantageously encompasses all of the receivers, but it may also only comprise a subset of the receivers.) For each response signal received by one of the receivers of this group, the following steps are carried out:

  a) Identifying, in the respective response signal, a first signal section caused by a surface wave traveling in said component from said ultrasound emitter to the ultrasound receiver having recorded the respective response signal: Such surface waves are present in most of the components typically tested. The surface waves carry only little information about the structure of the component, and they are therefore often ignored.
  b) Deriving a correction value from said first signal section: This step is based on the understanding that, even though the surface waves are often of little interest, their strength as measured by the receiver is a measure of how well a given receiver couples to the component under test.
  c) Rescaling at least a second signal section of the respective response signal with a scale factor depending on said correction value: This step now exploits the information gained in step b). Since the correction value describes how well a receiver couples to the component, this information allows to rescale at least that part of the response signal (i.e. "the second signal section" in the wording of the claims) that is of interest for further analysis, thereby reducing or even eliminating the influence of the quality of the coupling of the individual ultrasound receivers to the component under test.

In other words, the invention is based on the understanding that one major factor affecting the accuracy and robustness of the measurement is the quality of the coupling of the individual ultrasound receivers. For example, even a small amount of surface roughness, minor surface inhomogeneities, or a slight misalignment of the device when applying it to the component, may lead to some receivers coupling much better to the component than others.

To correct this inherent inaccuracy of the method of measurement, the invention exploits the fact that the surface wave is a good measure for how well a receiver couples to the component and by how much its signal should be scaled. By scaling the response signals (at least the parts of them that are of interest) as a function of the correction value, the dependence of the response signals on local surface irregularities or improper application of the device against the component can be reduced.

Once the second signal sections from the various receivers are scaled, they are advantageously combined, e.g. in a SAFT algorithm, for generating a result data set, such as an image of the inner structure of the component. Since the second signal sections are scaled according to the coupling quality of their respective receivers, the result data set will have improved accuracy and consistency.

There are various ways to identify the first signal section, i.e. the signal section describing the surface signal. These can be used independently or in combination.

Advantageously, the method comprises, for each ultrasound receiver in said group, the following steps:

- Attributing, to said ultrasound receiver, a time window: This time window is used for identifying the "first signal section" in the response signal, i.e. the section of the signal containing the surface wave.
- Using said time window for identifying the first signal section in the response signal measured by said ultrasound receiver: This means that only (or at least predominantly) the part of the response signal lying in the time window will be used for calculating the correction value.

In one embodiment, the temporal location of the time window is a function of the distance of the ultrasound receiver from the ultrasound emitter: Advantageously, the temporal location is proportional to this distance.

In another embodiment (which can, e.g. for consistency checking, be combined with the previous embodiment), the temporal location of the time window is selected as a function of the time at which a first pulse is detected in the response signal. In this context, the "first pulse" is the first one arriving after the probe signal has been sent into the components. This is based on the understanding that, in most components, the surface waves are the fastest signals propagating from the ultrasound emitter to the ultrasound receiver.

Advantageously, generating the probe signals and receiving the response signals takes place while a user is manually holding the device against the component to be tested. The signal scaling provided by the present invention is especially suited to compensate for issues due to a non-uniform application of pressure to the device. The invention therefore allows to obtain substantially steadier signals for those cases where the device is applied manually. This is of particular importance if images of the component's interior structure are derived from the response signals.

The invention also relates to a device for testing a component by means of ultrasound. This device comprises

- at least one ultrasound emitter for generating a probe signal,
- a plurality of ultrasound receivers for receiving a plurality of response signals, wherein the ultrasound receivers are located at differing locations in respect to said ultrasound emitter, and
- a control unit adapted and structured, for the response signal of at least a group of said ultrasound receivers, to

      a) identify, in said response signal, a first signal section caused by a surface wave traveling in said component from said ultrasound emitter to the ultrasound receiver,
      b) derive a correction value from said first signal section, and
      c) rescale at least a second signal section of said response signal with a scale factor depending on said correction value.

Advantageously, the control unit is adapted and structured to carry out the method according to any of the method claims with the potential exception of applying a device against the component, which is typically something the user of the device will do unless the device is e.g. robot operated.

The method and device according to the present invention can be used to probe any type of component, in particular samples of concrete.

In a particular embodiment, the invention can be used for creating image representations of the inner structure of the component, in particular using Synthetic aperture focusing technique (SAFT).

Brief Description of the Drawings

The invention will be better understood and objects other than those set forth above will become apparent when consideration is given to the following detailed description thereof. This description makes reference to the annexed drawings, wherein:

Fig. 1 shows an embodiment of a device for testing a component by means of ultrasound,

Fig. 2 shows an example of a block diagram of such a device, and

Fig. 3 shows a series of response signals illustrating methods for scaling them.

Modes for Carrying Out the Invention

Device:

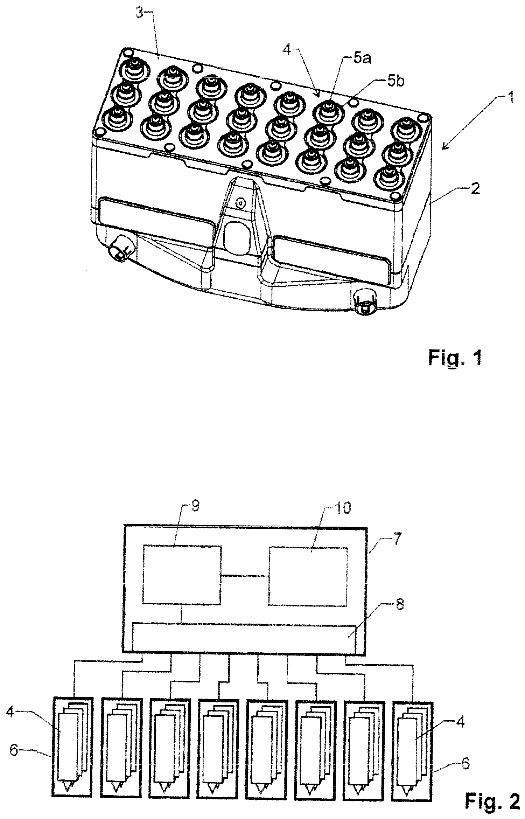

The device 1 shown in Fig. 1 can be used for the non-destructive testing of a component by means of ultrasound.

It comprises a housing 2 of e.g. substantially cuboid design.

Housing 2 has a probing side 3. Probing side 3 is advantageously flat.

A plurality of bidirectional ultrasonic transducers 4 is arranged on probing side 3 of housing 2. Each transducer 4 advantageously comprises a piezoelectric actuator equipped with a tip 5a and elastically mounted in a holder 5b, e.g. of the type described in WO 2016/029326.

The transducers 4 are advantageously located in a flat plane and adapted to be placed against a flat surface of a component to be tested.

In the embodiment shown, the transducers 4 are arranged in a rectangular matrix of rows and columns. The matrix has e.g. three such rows and eight columns. The transducers 4 in a single column can e.g. be part of a single channel of the device, as it will be described in more detail below.

Fig. 2 shows a block diagram of the device.

The diagram schematically shows the transducers 4 grouped into channels 6. In the shown embodiment, each channel 6 has three transducers 4.

In the present embodiment, the channels 6 are arranged in a line, i.e. along one direction, even though a two-dimensional arrangement can be envisaged for imaging the component in full 3D.

A controller 7 is connected to the channels 6 to control them and to receive signals therefrom. Controller 7 e.g. comprises interface circuitry 8 for interfacing with the channels 6, a CPU 9 adapted to control the operations and a memory 10 for storing data and firmware.

Further, controller 7 can be connected to input and output circuitry as well as to user-interface circuitry for receiving commands, sending data, and displaying measurement results.

In the present embodiment, each of the channels 6 can be operated as an ultrasound emitter or as an ultrasound receiver:

- When operating as an ultrasound emitter, the channel emits ultrasonic pulses into the surface of the component to be tested. Advantageously, all transducers 4 of the channel emit the same signal.
- When operating as an ultrasound receiver, the channel receives and measures ultrasonic signals detected at the component's surface. Advantageously, all the signals of its transducers 4 are combined into a single response signal, e.g. by adding.

In both cases, the tips 5a of the transducers 4 should be in contact with the surface of the component.

Measurement procedure:

To carry out a measurement, the user places device 1 against the component to be tested such that, if possible, all transducers 4 come into contact with it.

Then, at least one, typically exactly one at a time, of the channels 6 is set to operate as an ultrasound emitter. Further, several of the channels 6, advantageously at least all of the channels except for the channel operating as emitter, are operated as ultrasound receivers.

Controller 7 instructs the ultrasound emitter to generate a probe signal. The probe signal can e.g. comprise a single pulse cycle including the application of a positive followed by a negative voltage to the transducer(s) of the ultrasound emitter. However, more complex waveforms can be used as well.

Advantageously, but not necessarily, the probe signal is comparatively short as compared to the interval between consecutive probe signals in order to leave enough time to measure all echoes from a probe signal before issuing the next probe signal.

Controller 7 then collects the response signals measured by the ultrasound receivers:

The response signals correspond to the ultrasound vibrations detected by the transducer(s) of the channels 6 configured as ultrasound receivers. These vibrations are caused by the superposition of various signal paths between the ultrasound emitter and each ultrasound receiver.

- The ultrasound emitter emits surface waves that propagate along the surface of the component to be tested. These surface waves are in most cases the first ones to arrive at the location of the ultrasound receiver.
- The ultrasound emitter also emits waves into the bulk of the component to be tested. Inhomogeneities as well as surface structures (in particular the surface opposite the one the transducers 4 are applied to) cause these waves to be scattered, and some of these scattered waves will also arrive at the location of the ultrasound receiver, typically after the arrival of the surface wave.

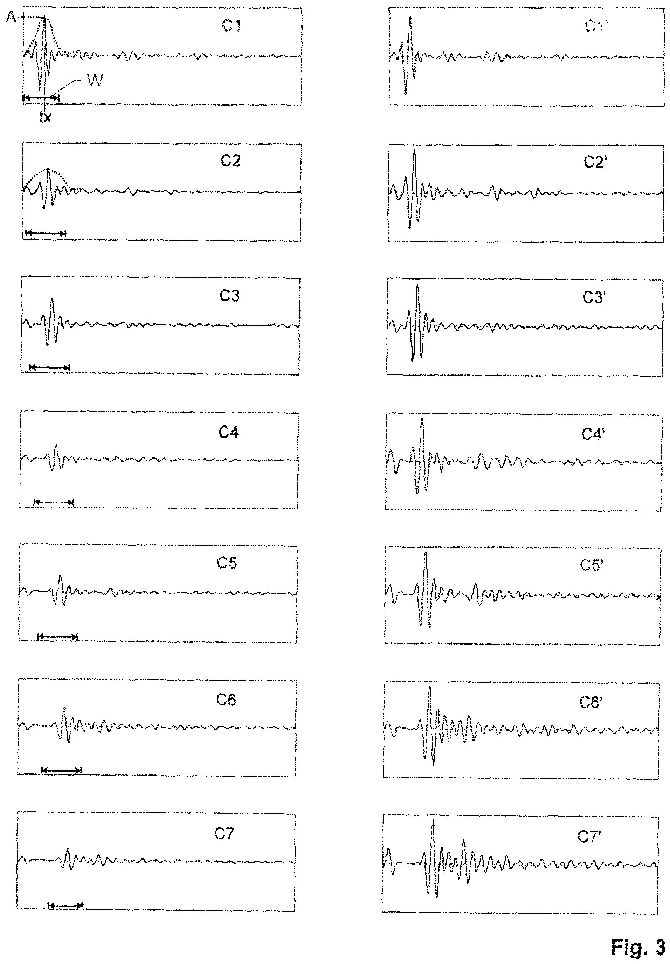

Fig. 3 shows, in its left column, an example of the response signals received by the ultrasound receivers. In this example, the channel at one end of the matrix of transducers 4 has sent out a single-period ultrasound pulse as described above. The channel next to the emitting channel is the first one to receive a signal C1 (topmost graph), the next adjacent channel receivers the signal C2, etc.

As can be seen from the left column of Fig. 3, each signal Ci (i = 1 ... 7) starts with a comparatively strong pulse structure, which is located in a "first signal section" (as called in the claims) and which is due to the surface wave arriving at the respective channel. Then, the signal shows a number of smaller oscillations, which are caused by waves arriving after being scattered from internal inhomogeneities of the component or from its backside. These smaller oscillations are typically the ones of interest for further processing, e.g. in the context of SAFT processing.

As can further be seen from the left column in Fig. 3, the time of arrival of the surface wave depends on the ultrasound receiver. The further a receiver is away from the ultrasound emitter, the later the surface wave arrives. This is caused by the fact that the surface wave's velocity of propagation is limited. A typical velocity of the surface wave in concrete is e.g. around 2500 m/s.

Finally, as it can also be seen from the left column of Fig. 3, the amplitudes of the pulses vary between the various response signals. Even though a certain attenuation of amplitude could be expected with increasing distance from the ultrasound emitter, the examples show clearly that there are differences between signal height that cannot be explained even if such an attenuation were postulated. For example, the signals C5 and C6 are stronger than signal C4 even though signal C4 was measured closer to the ultrasound emitter than signals C5 and C6. This variation of amplitude is primarily due to the different coupling strengths between the various channels and the component. As described above, irregularities of the component's surface give rise to such differences in coupling.

Signal scaling:

As mentioned above, such effects can be compensated for by suitable signal scaling.

In general, a channel measuring a weak amplitude of the arriving surface wave is poorly coupled to the component. Therefore, it will also measure the subsequently arriving reflected waves with smaller sensitivity.

In order to compensate for such variations, each ultrasound signal Ci is rescaled using a scale factor Si:

$$Ci' = Si \cdot Ci, \qquad\qquad (1)$$

with Ci' denoting the rescaled signal. Such rescaled signals Ci' are shown in the right column of Fig. 3.

It must be noted that the correction according to Eq. (1) does not necessarily have to be carried out over all the measured response signals. It may also be carried out over a "second signal section" (as called in the claims) only, namely over that part of the signal that is used for further processing.

Scaling factor Si can be derived from a correction value Vi describing the strength of the response signal in its "first signal section", i.e. the strength of the measured surface wave.

In general, scaling factor Si will be a function of the correction value Vi where the scaling factor Si becomes smaller as the correction value Vi increases. In most cases, a reciprocal relation provides best results, i.e.

$$Si = Ki/Vi, \qquad\qquad (2)$$

with Ki being a constant. Ki can be the same value for all ultrasound receivers. Alternatively, it may also take into account the natural damping of the surface wave as it propagates from the ultrasound emitter to the ultrasound receiver, for example by setting

$$Ki = K \cdot \exp(\alpha \cdot xi), \qquad\qquad (3)$$

with $\alpha$ being a attenuation constant describing the damping of the surface wave per length and xi being the distance of the respective ultrasound receiver from the ultrasound emitter. K is a constant that is typically common to all ultrasound receivers.

In the following, we describe various ways to calculate the correction value Vi.

In a first step, the part of the response signal corresponding to the surface wave has to be identified. For this purpose, a time window W (as shown in Fig. 3) can be attributed to each ultrasound receiver. This type window is used to identify the "first signal section" as defined above, i.e. the section of the signal that is expected to be dominated by the surface wave.

In one embodiment, the temporal location (i.e. the window's start and end times) can be calculated to be proportional to the distance xi of the ultrasound receiver from the ultrasound emitter. For example, the center time ti of the time window can be calculated by

$$ti = xi \ / \ c, \hspace{4cm} (4)$$

with c being the velocity of the surface wave.

The length of the time window is typically a function of the length of the probe signal (pulse) emitted by the ultrasound emitter. Advantageously, the length of the time window is chosen to be at least as large as the length of the emitted pulse, advantageously somewhat larger in order to compensate for an error in the assumed velocity c of the surface wave. For example, the length of the time window is between the length of the pulse and five times the length of the pulse, in particular it is approximately twice the length of the pulse.

Alternatively, or in addition thereto, the time window can be positioned by searching for the first strong pulse (e.g. a pulse whose amplitude exceeds a given threshold amplitude) in the response signal. Such a first pulse typically indicates the arrival of the surface wave. In other words, the temporal location of the time window is selected as a function of the time of arrival of the first pulse in the response signal after the probe signal has been emitted.

This analysis of the time of arrival of the first pulse can be combined with the calculation of Eq. (4) in order to check the two methods for consistency. If the results of the two methods are inconsistent, rescaling can, for example, be suppressed, or a different (e.g. longer) time window can be used.

Once a suitable time window W has been determined, the correction value Vi can be derived from the strength of the signal therein. Again, there are various ways to do that:

In one example, the envelope of the signal of the response signal can be calculated, at least in the time window W. Such an envelope is shown in dotted lines in Figs. C1 and C2.

Algorithms for calculating the envelope of an oscillating signal are known to the skilled person. For example, the signal can be rectified (i.e. the absolute value of the signal is used) and then low-pass filtered, with a low pass filter.

The low pass filter can e.g. be dimensioned by assuming that the probe signal is an amplitude modulated signal having a carrier frequency corresponding to the pulse frequency (e.g. 50 kHz) and that the bandwidth of this signal is B. After rectification, the spectrum of the raw signal is split into a base band signal at 0 Hz and a signal at the double central frequency of the pulse (i.e. at e.g. 100 kHz). Spectral components around the double central frequency (i.e. around 100 kHz) are undesired and to be filtered out. Hence, the cut-off frequency of the low pass filter should advantageously be around B/2. This also ensures that the base band signal (i.e. the envelope) is not influenced by the filter, while the undesired frequency components at the double central frequency are suppressed).

Once the envelope has been calculated, its maximum or another quantity describing its strength, can be used for deriving the correction value Vi. For example, the correction value Vi can be set to be equal to the highest value A of the envelope, as shown in the top left graph of Fig. 3.

Alternatively, or in addition thereto, the correction value can be a function of, in particular be proportional to, the maximum value of the response signal itself, without calculating the envelope first. In particular, the search of the maximum value is again limited to the window W.

It must be noted, though, that using the envelope is more robust against erratic signal noise than using an individual peak value of the response signal.

It must further be noted that the window W is not necessarily a "rectangular" window in the sense that any signals outside it are ignored. It may also be a "weighted" window in the sense that it is represented by a distribution function to be multiplied with the response signal, wherein the distribution function has a flat maximum over a region centered on the expected time of arrival of the surface wave and gradually decays to zero on both sides thereof.

Further, methods not or not explicitly relying on a time window can be used, e.g. by simply searching for the highest signal values in the response signal.

Notes:

In the embodiment shown here, the calculation of the correction value as well as the rescaling is carried out by controller 7, e.g. implemented as operations in the programming of CPU 9. Alternatively, or in addition thereto, some or all of these steps can be carried out at the level of the individual channels and/or at a processing unit outside housing 2.

The transducers of the ultrasound emitter are advantageously operated to generate shear waves, i.e. their tips 5a are moved in a direction parallel to probing side 3 and parallel to the column of transducers 4 in the ultrasound emitter channel. However, different oscillations can be used, too.

The device can be equipped with user input controls that allow the user to selectively enable or disable the signal scaling described here.

In the example above, it was assumed that one channel 6 was the ultrasound emitter, while the other channels 6 were the ultrasound receivers. In most modes of operation, the role of the ultrasound emitter is subsequently attributed to all channels 6, while each time the other channels 6 will be used as receivers.

Advantageously, the ultrasound emitter and/or each ultrasound receiver comprises several ultrasonic transducers 4, all of which are positioned to contact the component to be tested.

As mentioned, the present method and device are particularly suited for probing concrete and other hard materials that might exhibit surface irregularities.

Also, it works well without any coupling liquid or paste applied between the transducers and the component. Conventional methods are typically very sensitive to surface irregularities in the absence of such coupling liquid or paste.

Advantageously, each ultrasound receiver comprises one or more tips that are applied to the component while receiving the response signals. Such a design provides a good channel signal separation and is well suited for individually scaling the response signals.

While there are shown and described presently preferred embodiments of the invention, it is to be distinctly understood that the invention is not limited thereto but may be otherwise variously embodied and practiced within the scope of the following claims.

**Claims**

1. A method for testing a component by means of ultrasound comprising the steps of
   applying a device (1) having at least one ultrasound emitter and a plurality of ultrasound receivers against the component, wherein the ultrasound receivers are located at differing locations in respect to said ultrasound emitter,
   generating a probe signal by means of said ultrasound emitter,
   receiving, by means of said ultrasound receivers, a plurality of response signals (Ci), and
   in the response signal (Ci) of at least a group of said ultrasound receivers:

   a) identifying, in said response signal (Ci), a first signal section caused by a surface wave traveling in said component from said ultrasound emitter to the ultrasound receiver having received said response signal (Ci),
   b) deriving a correction value (Vi) from said first signal section, and
   c) rescaling at least a second signal section of said response signal (Ci) with a scale factor depending on said correction value (Vi).

2. The method of claim 1 further comprising the step of combining said second signal sections for generating a result data set.

3. The method of any of the preceding claims further comprising, for each ultrasound receiver in said group, the steps of

   - attributing, to said ultrasound receiver, a time window (W), and
   - using said time window (W) for identifying the first signal section in the response signal (Ci) measured by said ultrasound receiver.

4. The method of claim 3 wherein a temporal location of the rime window (W) is a function of a distance (xi) of the ultrasound receiver from the ultrasound emitter.

5. The method of claim 4 wherein the temporal location of the time window (W) is proportional to the distance (xi) between the ultrasound receiver and the ultrasound emitter.

6. The method of any of the claims 3 to 5 wherein a temporal location of the time window (W) is selected as a function of a time of arrival of a first pulse in the response signal (Ci) after the probe signal.

7. The method of any of the claims 3 to 6 wherein a length of the time window (W) is between the length of the probe signal emitted by the ultrasound emitter and five times the length of the probe signal, in particular equal to two times the length of the probe signal.

8. The method of any of the preceding claims comprising the step of calculating an envelope of said response signal (Ci) at least in said first section and using said envelope for deriving said correction value (Vi).

9. The method of any of the preceding claims wherein said correction value (Vi) is proportional to a maximum (A) of said response signal (Ci) or of an envelope of said response signal (Ci) in said first section.

10. The method of any of the preceding claims wherein the ultrasound emitter and/or each ultrasound receiver comprises several ultrasonic transducers (4).

11. The method of any of the preceding claims wherein each ultrasound receiver comprises one or more tips (5a) that are applied to the component while receiving the response signals.

12. The method of any of the preceding claims wherein generating the probe signals and receiving the response signals takes place while a user is manually holding the device against the component to be tested.

13. A device for testing a component by means of ultrasound comprising
at least one ultrasound emitter for generating a probe signal,
a plurality of ultrasound receivers for receiving a plurality of response signals (Ci), wherein the ultrasound receivers are located at differing locations in respect to said ultrasound emitter, and
a control unit adapted and structured, for the response signal (Ci) of at least a group of said ultrasound receivers, to

    a) identify, in said response signal (Ci), a first signal section caused by a surface wave traveling in said component from said ultrasound emitter to the ultrasound receiver having received said response signal (Ci),
    b) derive a correction value (Vi) from said first signal section, and
    c) rescale at least a second signal section of said response signal (Ci) with a scale factor depending on said correction value (Vi).

14. Use of the method of any of claims 1 to 12 or the device of claim 13 for probing concrete and/or for creating image representations of an inner structure of the component.

**Patentansprüche**

1. Verfahren zum Prüfen eines Bauteils mittels Ultraschall, umfassend die folgenden Schritte
Anbringen einer Vorrichtung (1) mit mindestens einem Ultraschallsender und einer Vielzahl von Ultraschallempfängern an dem Bauteil, wobei die Ultraschallempfänger an unterschiedlichen Stellen in Bezug auf den Ultraschallsender angeordnet sind,
Erzeugen eines Prüfsignals mittels des Ultraschallsenders,
Empfangen einer Vielzahl von Antwortsignalen (Ci) mittels der Ultraschallempfänger, und
im Antwortsignal (Ci) von mindestens einer Gruppe der Ultraschallempfänger:

    a) Identifizieren eines ersten Signalabschnitts in dem Antwortsignal (Ci), der durch eine Oberflächenwelle verursacht wird, die sich in dem Bauteil von dem Ultraschallsender zu dem Ultraschallempfänger ausbreitet, der das Antwortsignal (Ci) empfangen hat,
    b) Ableiten eines Korrekturwertes (Vi) aus dem ersten Signalabschnitt, und
    c) Neuskalierung mindestens eines zweiten Signalabschnitts des Antwortsignals (Ci) mit einem von dem Korrekturwert (Vi) abhängigen Skalierungsfaktor.

2. Verfahren nach Anspruch 1, ferner umfassend den Schritt des Kombinierens der zweiten Signalabschnitte zur Erzeugung eines Ergebnisdatensatzes.

3. Das Verfahren nach einem der vorhergehenden Ansprüche ferner umfassend für jeden Ultraschallempfänger in der Gruppe die folgenden Schritte

    - Zuordnen eines Zeitfensters (W) zu dem Ultraschallempfänger und

- Verwenden des Zeitfensters (W) zum Identifizieren des ersten Signalabschnitts in dem von dem Ultraschallempfänger gemessenen Antwortsignal (Ci).

4. Verfahren nach Anspruch 3, wobei die zeitliche Lage des Zeitfensters (W) eine Funktion des Abstands (xi) des Ultraschallempfängers vom Ultraschallsender ist.

5. Verfahren nach Anspruch 4, wobei die zeitliche Lage des Zeitfensters (W) proportional zum Abstand (xi) zwischen dem Ultraschallempfänger und dem Ultraschallsender ist.

6. Verfahren nach einem der Ansprüche 3 bis 5, bei dem eine zeitliche Lage des Zeitfensters (W) als Funktion der Ankunftszeit eines ersten Impulses im Antwortsignal (Ci) nach dem Prüfsignal gewählt wird.

7. Verfahren nach einem der Ansprüche 3 bis 6, bei dem eine Länge des Zeitfensters (W) zwischen der Länge des vom Ultraschallsender emittierten Prüfsignals und der fünffachen Länge des Prüfsignals liegt, insbesondere gleich der zweifachen Länge des Prüfsignals ist.

8. Verfahren nach einem der vorhergehenden Ansprüche umfassend den Schritt des Berechnens einer Hüllkurve des Antwortsignals (Ci) zumindest im ersten Abschnitt und des Verwendens der Hüllkurve zum Ableiten des Korrekturwertes (Vi).

9. Verfahren nach einem der vorhergehenden Ansprüche, wobei der Korrekturwert (Vi) proportional zu einem Maximum (A) des Antwortsignals (Ci) oder einer Hüllkurve des Antwortsignals (Ci) im ersten Abschnitt ist.

10. Verfahren nach einem der vorhergehenden Ansprüche, wobei der Ultraschallsender und/oder jeder Ultraschallempfänger mehrere Ultraschallwandler (4) umfasst.

11. Verfahren nach einem der vorhergehenden Ansprüche, wobei jeder Ultraschallempfänger eine oder mehrere Spitzen (5a) aufweist, die auf das Bauteil aufgebracht werden, während die Antwortsignale empfangen werden.

12. Verfahren nach einem der vorhergehenden Ansprüche, wobei das Erzeugen der Prüfsignale und der Empfang der Antwortsignale stattfinden, während ein Benutzer das Gerät manuell gegen das zu prüfende Bauteil hält.

13. Vorrichtung zum Prüfen eines Bauteils mittels Ultraschall, umfassend
mindestens einen Ultraschallsender zum Erzeugen eines Prüfsignals,
eine Vielzahl von Ultraschallempfängern zum Empfangen einer Vielzahl von Antwortsignalen (Ci), wobei die Ultraschallempfänger an unterschiedlichen Stellen in Bezug auf den Ultraschallsender angeordnet sind, und
eine Steuereinheit, die angepasst und strukturiert ist, in Bezug auf das Antwortsignal (Ci) mindestens einer Gruppe der Ultraschallempfänger

    a) in dem Antwortsignal (Ci) einen ersten Signalabschnitt zu identifizieren, der durch eine Oberflächenwelle verursacht wird, die sich in dem Bauteil von dem Ultraschallsender zu dem Ultraschallempfänger ausbreitet, der das Antwortsignal (Ci) empfangen hat,
    b) einen Korrekturwert (Vi) aus dem ersten Signalabschnitt abzuleiten, und
    c) mindestens einen zweiten Signalabschnitt des Antwortsignals (Ci) mit einem von dem Korrekturwert (Vi) abhängigen Skalierungsfaktor neu zu skalieren.

14. Verwendung des Verfahrens nach einem der Ansprüche 1 bis 12 oder der Vorrichtung nach Ansprüche 13 zum Prüfen von Beton und/oder zur Erzeugung von bildlichen Darstellungen einer inneren Struktur des Bauteils.

**Revendications**

1. Un procédé pour tester un composant par ultrasons comprenant les étapes
d'appliquer un dispositif (1) ayant au moins un émetteur d'ultrasons et une pluralité de récepteurs contre le composant, les récepteurs d'ultrasons étant situés à des endroits différents par rapport audit émetteur d'ultrasons,
de générer un signal de sonde à l'aide dudit émetteur d'ultrasons,
de recevoir à l'aide desdits récepteurs d'ultrasons une pluralité des signaux de réponse (Ci), et
dans le signal de réponse (Ci) d'au moins un groupe desdits récepteurs d'ultrasons :

a) d'identifier dans ledit signal de réponse (Ci) une première section de signal causée par une onde de surface qui se propage dans ledit composant dudit émetteur d'ultrasons audit récepteur d'ultrasons qui a reçu ledit signal de réponse (Ci),

b) de dériver une valeur de correction (Vi) de ladite première section de signal, et

c) de rééchelonner au moins une deuxième section de signal dudit signal de réponse (Ci) avec un facteur d'échelonnement qui dépend de ladite valeur de correction (Vi) .

2. Le procédé selon la revendication 1, en outre comprenant l'étape de combiner lesdites deuxièmes sections de signal pour générer un set de données de résultats.

3. Le procédé selon l'une des revendications précédentes, comprenant en outre pour chaque récepteur d'ultrasons dans le groupe les étapes :

- d'attribuer audit récepteur d'ultrasons une fenêtre temporelle (W), et
- d'utiliser ladite fenêtre temporelle (W) pour identifier la première section de signal dans le signal de réponse (Ci) mesuré par ledit récepteur d'ultrasons.

4. Le procédé selon la revendication 3, un endroit temporel de la fenêtre temporelle (W) étant une fonction d'une distance (xi) entre le récepteur d'ultrasons et l'émetteur d'ultrasons.

5. Le procédé selon la revendication 4, l'endroit temporel de la fenêtre temporelle (W) étant proportionnel avec la distance (xi) entre le récepteur d'ultrasons et l'émetteur d'ultrasons.

6. Le procédé selon l'une des revendications 3 à 5, un endroit temporel de la fenêtre temporelle (W) étant sélectionné en fonction d'un instant de l'arrivée d'un premier pulse du signal de réponse (Ci) après le signal de sonde.

7. Le procédé selon l'une des revendications 3 à 6, une longueur de la fenêtre temporelle (W) étant entre la longueur du signal de sonde émet par l'émetteur d'ultrasons et cinq fois la longueur du signal de sonde, en particulier égale à deux fois la longueur du signal de sonde.

8. Le procédé selon l'une des revendications précédentes, comprenant l'étape de calculer une enveloppe dudit signal de réponse (Ci) au moins dans ladite section et d'utiliser ladite enveloppe pour dériver ladite valeur de correction (Vi).

9. Le procédé selon l'une des revendications précédentes, ladite valeur de correction (Vi) étant proportionnelle à un maximum (A) dudit signal de réponse (Ci) ou d'une enveloppe dudit signal de réponse (Ci) dans ladite première section.

10. Le procédé selon l'une des revendications précédentes, l'émetteur d'ultrasons et/ou chaque récepteur d'ultrasons comprenant plusieurs transducteurs (4).

11. Le procédé selon l'une des revendications précédentes, chaque récepteur d'ultrasons comprenant une ou plusieurs pointes (5a) qui sont appliquées au composant pendant la réception des signaux de réponse.

12. Le procédé selon l'une des revendications précédentes, la génération des signaux de sonde et la réception des signaux de réponse se déroulant pendant qu'un utilisateur tient le dispositif contre le composant à tester.

13. Un dispositif pour tester un composant à l'aide d'ultrasons, comprenant
au moins un émetteur d'ultrasons pour générer un signal de sonde,
une pluralité de récepteurs d'ultrasons pour recevoir une pluralité des signaux de réponse (Ci), les récepteurs d'ultrasons étant situés à des endroits différents par rapport audit émetteur d'ultrasons, et
une unité de commande adaptée et structurée, pour le signal de réponse (Ci) d'au moins un groupe desdits récepteurs d'ultrasons :

a) à identifier dans ledit signal de réponse (Ci) une première section de signal causée par une onde de surface qui se propage dans ledit composant dudit émetteur d'ultrasons audit récepteur d'ultrasons qui a reçu ledit signal de réponse (Ci),

b) à dériver une valeur de correction (Vi) de ladite première section de signal, et

c) à rééchelonner au moins une deuxième section de signal dudit signal de réponse (Ci) avec un facteur d'échelonnement qui dépend de ladite valeur de correction (Vi) .

**14.** Utilisation du procédé selon l'une des revendications 1 à 12 ou du dispositif selon la revendication 13 pour sonder du béton et/ou pour créer des représentations d'images d'une structure intérieure du composant.

**Fig. 1**

**Fig. 2**

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7587943 B

- WO 2016029326 A